# EUROPÄISCHE PATENTSCHRIFT

(11) **EP 1 679 456 B1**
(45) Veröffentlichungstag und Bekanntmachung des Hinweises auf die Patenterteilung: **05.09.2007**
(21) Anmeldenummer: 05100042.0
(22) Anmeldetag: 05.01.2005
(51) Int. Cl.: F16H 63/48

(54) **Sicherheitsverriegelung, insbesondere für die Parksperre automatischer Getriebe**
Safety lock especially for the parking brake of automatic transmissions
Verrouillage de sécurité en particulier pour le frein de parcage des transmissions automatiques

(43) Veröffentlichungstag der Anmeldung: 12.07.2006
(73) Patentinhaber: Getrag Ford Transmissions GmbH, 50735 Köln (DE)
(72) Erfinder: Laffien, Gerhard, 50529 Pulheim (DE); Eggert, Ulrich, 41751 Viersen (DE); Koch, Guido, 52078 Aachen (DE); Rothvoss, Stefan, 45257 Essen (DE); Leibbrandt, Martin, 50181 Bedburg (DE); Möhlmann, Reinhard, 50739 Köln (DE); Hegerath, Andreas, 50126 Bergheim (DE); Von der Lippe, Wolfgang, 53639 Königswinter (DE)
(74) Vertreter: Dörfler, Thomas

(56) Entgegenhaltungen:
- DE-A1- 10 037 565
- DE-A1- 10 347 667
- DE-A1- 19 820 920
- DE-A1- 19 834 156

## Beschreibung

Die Erfindung betrifft eine Sicherheitsverriegelung zur Schaltung dreier Verriegelungsstufen einer Sperrvorrichtung, nämlich einer Parkstufe, einer Betriebsstufe sowie einer Neutralstufe, insbesondere zur Sicherheitsverriegelung der Parksperre eines automatischen Getriebes eines Kraftfahrzeugs, umfassend einen einseitig wirkenden Hydraulikzylinder mit Kolben und Kolbenstange, wobei der Kolben in einer Bewegungsrichtung per Hydraulikdruck und in entgegengesetzter Bewegungsrichtung über eine Rückstellfeder bewegbar ist, sowie umfassend ein Betätigungselement für die Sperrvorrichtung, das über den Hydraulikzylinder angetrieben ist, ferner umfassend einen federbelasteten Rasthebel und einen an dem Betätigungselement vorgesehenen Rastanschlag, wobei der Rasthebel eine Magnetisierungsfläche aufweist und ein mit der Magnetisierungsfläche zusammenwirkender Elektromagnet zur Schaltung der Neutralstufe der Sperrvorrichtung vorgesehen ist.

Bei einer Sicherheitsverriegelung handelt es sich um eine Zusatzeinrichtung für eine Sperrvorrichtung einer Maschine. Die Maschine kann beispielsweise ein Kraftfahrzeug sein beziehungsweise ein automatisches Getriebes eines Kraftfahrzeugs. Ein Kraftfahrzeuggetriebe weist eine Sperrvorrichtung auf, um einen Drehmomentwandler zu überbrücken, der im Stillstand eine Kraftübertragung zwischen den Rädern des Kraftfahrzeugs und dem Getriebe unterbricht. Üblicherweise weist eine Sperrvorrichtung eines Kraftfahrzeuggetriebes ein Sperrrad mit einer Verzahnung auf, in die ein Sperrelement eingreifen kann.

Aus der DE 198 20 920 A1 ist eine gattungsgemäße Sicherheitsverriegelung bekannt. Diese weist ein Betätigungselement in Form eines Stellhebels auf, der über einen Hydraulikzylinder angetrieben ist. Der bekannte Stellhebel hat zweierlei Funktionen. Er betätigt einerseits die Sperrvorrichtung und andererseits einen Rasthebel. Der Rasthebel ist mit einer Magnetisierungsfläche versehen und wirkt mit einem Elektromagneten zusammen.

In der Parkstufe ist der Motor des Kraftfahrzeugs stets abgeschaltet und das Kraftfahrzeug steht still. Dabei drückt die Rückstellfeder des Hydraulikzylinders das Sperrelement in das Sperrrad.

Für den Fahrbetrieb ist die Betriebsstufe vorgesehen, in der das Sperrelement über den Hydraulikzylinder gegen die Wirkung der Rückstellfeder außer Eingriff gebracht ist. Die Betriebsstufe der Sicherheitsverriegelung ist nur bei laufendem Motor möglich. Bei Motorstillstand fehlt der Hydraulikdruck und fällt die Sicherheitsverriegelung federbetätigt zurück.

Um das Kraftfahrzeug jedoch schieben oder zum Beispiel durch eine Waschstraße bewegen zu können, muss eine Neutralstufe einstellbar sein, in der die Sperrvorrichtung trotz stillstehendem Motor und fehlendem Hydraulikdruck außer Eingriff gehalten wird. Zu diesem Zweck ist der Rasthebel der Sicherheitsverriegelung während der Betriebsstufe - also während der Fahrt des Kraftfahrzeugs - in einer Bereitschaftsstellung gehalten. Sinkt nun der Hydraulikdruck nach Abschaltung des Motors, so fällt das Betätigungselement durch die Wirkung der Rückstellfeder des Hydraulikzylinders zurück. Die Rückstellbewegung des Betätigungselement wird aber von dem Rasthebel aufgehalten. Der Rasthebel wird durch den Elektromagneten in der Bereitschaftsstellung gehalten. In der Neutralstufe wird also das Betätigungselement bei sinkendem Hydraulikdruck durch den Rasthebel daran gehindert, sofort in die Parkstellung zurückzufallen und das Sperrrad zu arretieren. Die Neutralstufe wird gehalten, solange der Elektromagnet Strom erhält. Sobald der Strom abgeschaltet wird, wird der Rasthebel federbetätigt aus seiner Bereitschaftsstellung geschwenkt und gibt das Betätigungselement frei. Das Betätigungselement fällt dann zurück. Die Sicherheitsverriegelung erreicht die Parkstufe, in der das Betätigungselement das Sperrelement in das Sperrrad einrückt.

Der Mechanismus der Sicherheitsverriegelung gemäß der DE 198 20 920 A1 ist aufwändig und raumgreifend, weil ein Stellhebel vorgesehen ist, der relativ zu dem Rasthebel sehr groß dimensioniert ist.

Der Erfindung liegt die Aufgabe zugrunde, eine Sicherheitsverriegelung vorzuschlagen, die kompakter und einfacher aufgebaut ist, als die bekannte Sicherheitsverriegelung.

Erfindungsgemäß wird die Aufgabe dadurch gelöst, dass die Kolbenstange in Stangenbereiche aufgeteilt ist, wobei ein erster Stangenbereich das Betätigungselement für die Sperrvorrichtung bildet, und ein zweiter Stangenbereich eine Stellkontur aufweist, mit der der Rasthebel in eine Bereitschaftsstellung bewegbar ist.

Der aus der DE 198 20 920 A1 bekannte raumgreifende Stellhebel ist ersetzt worden. Der Erfindungsgegenstand integriert das Betätigungselement für die Sperrvorrichtung in die Kolbenstange. Das gleiche gilt für die Betätigung des Rasthebels. Dessen Funktion ist ebenfalls in die Kolbenstange integriert. Vorteilhaft wird die Kolbenstange nur geradlinig bewegt, wodurch Querkräfte auf die Kolbenstange weitgehend entfallen. Die Sicherheitsverriegelung ist platzsparend.

Die Stellkontur der Kolbenstange und der Rasthebel wirken zusammen. Durch eine geradlinige Ausfahrbewegung der Kolbenstange gleitet die Stellkontur an dem Rasthebel entlang, der federbelastet ist. Dadurch ergibt sich eine Zwangsführung für den Rasthebel. Die Stellkontur zwingt den Rasthebel zu einer Schwenkbewegung. Dabei wird die Magnetisierungsfläche des Rasthebels zum Elektromagnet hin bewegt, bis der Rasthebel seine Bereitschaftsstellung erreicht hat. In der Bereitschaftsstellung liegt die Magnetisierungsfläche des Rasthebels an dem Elektromagnet an oder ist diesem zumindest so nah, dass der Elektromagnet in bestromten Zustand den Rasthebel sicher anziehen und halten kann.

Zweckmäßig ist ein Stangenbereich der Kolbenstange auf einer Seite des Kolbens und der andere Stangenbereich auf der anderen Seite des Kolbens vorgesehen. An beiden Enden des Hydraulikzylinders ragen Stangenbereiche der Kolbenstange hervor. Für die Funktion der Vorrichtung ist unerheblich, ob es sich um eine durchgehende einstückige Kolbenstange handelt, oder um getrennte Stangen, die an dem Kolben angeschlossen sind.

Vorteilhaft weist die Stellkontur einen Schrägbereich auf sowie einen Haltebereich, der parallel zur Kolbenstange ausgerichtet ist. Während eines Starts des Fahrzeugs baut sich Hydraulikdruck auf und der Kolben des Hydraulikzylinders wird gegen die Rückstellfeder verfahren. Die Stellkontur bewegt sich dabei an den Rasthebel heran und verändert mit ihrem Schrägbereich allmählich die Schwenkposition des Rasthebels. Der Rasthebel hat seine Bereitschaftsstellung dann erreicht, wenn er über den Schrägbereich maximal verschwenkt worden ist und an dem Haltebereich anliegt.
Günstigerweise ist in der Betriebsstufe der Sicherheitsverriegelung der Haltebereich der Stellkontur der Kolbenstange mit dem Rasthebel in Kontakt und liegt die Magnetisierungsfläche des Rasthebels an dem Elektromagnet an. Die Magnetisierungsfläche muss dabei nicht gegen den Elektromagnet gedrückt sein. Es genügt bereits, wenn sie sich in geringem Abstand nah an dem Elektromagneten befindet, damit dieser den Rasthebel durch Bestromung sicher anziehen kann.

Ein weiterer Nutzen ergibt sich, wenn ein Schalter vorgesehen ist, über den ein Strom für den Elektromagneten dann schaltbar ist, wenn der Hydraulikdruck in dem Hydraulikzylinder auf einen bestimmten Grenzdruck abgesunken ist. Durch diese Maßnahme muss der Elektromagnet nicht permanent bestromt werden, während der Rasthebel in seiner Bereitschaftsstellung verweilt. Eine Bestromung des Elektromagneten erfolgt erst im Bedarfsfall, wenn der Hydraulikdruck sinkt. Dadurch wird der elektrische Teil der Sicherheitsverriegelung sehr entlastet und geschont. Damit sinkt auch der Energieverbrauch und es steigt der Wirkungsgrad des Gesamtsystems.

Einfacherweise ist an der Kolbenstange ein Betätigungsteil für den Schalter vorgesehen. Das Betätigungsteil ist so angeordnet, dass der Schalter dann betätigt wird, wenn die Kolbenstange von der Rückstellfeder um einen bestimmten Weg zurückbewegt worden ist, weil der Hydraulikdruck sinkt. Dabei kann der Schalter selbst mechanisch durch die Kolbenstange betätigt werden. Der Schalter kann aber auch berührungslos ausgeführt sein, z. B. als Hallelement.

Ein weiterer Nutzen wird darin gesehen, dass mehrere Rasthebel vorgesehen sind. Diese können beispielsweise umfänglich um die Stellkontur angeordnet sein, wenn diese drehsymmetrisch ausgebildet ist und einen kegeligen Schrägbereich sowie einen zylindrischen Haltebereich aufweist.

Um eine Verschmutzung zu verhindern, kann der Zwischenraum zwischen Elektromagnet und der Magnetisierungsfläche des Rasthebels mit einer Kapselung versehen sein.

Zwischen der Stellkontur und dem Rasthebel ist günstigerweise ein Ausgleichselement zwischengeschaltet. Dieses dämpft den ersten Kontakt der Stellkontur mit dem Rasthebel. Dadurch werden unter anderem Geräusche vermindert.

Die Kolbenstange kann als zylinderförmige Abschnitte besitzen und so in Zusammenwirken mit einem Gehäuse als Ventil des Druckkreislaufes dienen. Dies erlaubt in Zusammenarbeit mit der im folgenden besprochenen Notfallentriegelung bei Ausfall der Elektrik das Einlegen von Notlaufgängen.

Die Parksperre kann auch mit einer mechanischen Notentriegelung ausgestattet werden. Hierzu kann ein Ende eines Bowdenzuges an der Kolbenstange und das andere Ende an einer zugänglichen Stelle im Motorraum, Kofferraum, Innenraum oder anderer Stelle angebracht sein. Mittels eines umlegbaren Hebels angebracht, der mehrere stabile Positionen einnehmen kann, kann durch Umlegen des Hebels der Bowdenzug und die angebundene Kolbenstange bewegt werden, und zwar so, dass die Parksperre geöffnet wird. Durch das Einstellen unterschiedlicher stabiler Positionen werden dabei in Zusammenarbeit mit dem vorher besprochenen Ventil auf der Kolbenstange unterschiedliche Gänge eingelegt. Hierbei könnten beispielsweise ein Vorwärts- und ein Rückwärtsgang vorgesehen werden.

Nachstehend ist die Erfindung in einer Zeichnung beispielhaft dargestellt und anhand einzelner Figuren detailliert beschrieben. Es zeigen:
- Fig. 1:: Eine Sicherheitsverriegelung für ein automatisches Getriebe eines Kraftfahrzeugs in der Einstellung "Parkstufe",
- Fig. 2:: Die Sicherheitsverriegelung gemäß Fig. 1 in der Einstellung "Betriebsstufe",
- Fig. 3: Die Sicherheitsverriegelung gemäß Fig. 1 in der Einstellung "Neutralstufe".

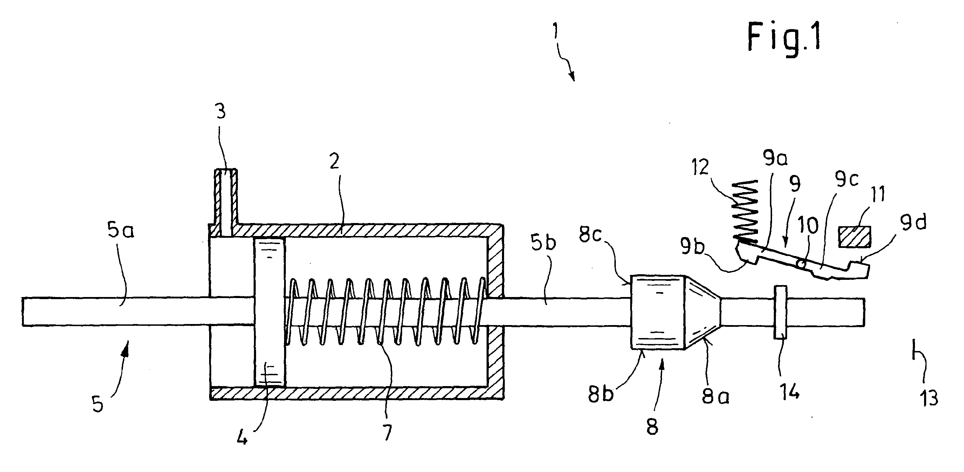

Nach Fig. 1 ist eine Sicherheitsverriegelung 1 dargestellt, die als Zusatzeinrichtung für eine Parksperre eines Kraftfahrzeugs mit automatischem Getriebe dient.

Die Sicherheitsverriegelung 1 weist einen einfachwirkenden Hydraulikzylinder 2 mit einer Anschlussöffnung 3 für eine Hydraulikleitung und mit Kolben 4 sowie beidseitiger Kolbenstange (5) auf, die in Stangenbereiche 5a beziehungsweise 5b aufgeteilt ist. Nachfolgend werden die Stangenbereiche jeweils als Kolbenstange 5a und Kolbenstange 5b bezeichnet. Im Einsatz wird der Hydraulikdruck von einem Hydrauliksystem des Kraftfahrzeugs bereitgestellt. Der Hydraulikzylinder 2 ist mit einer Rückstellfeder 7 versehen, um seinen Kolben 4 bei sinkendem Hydraulikdruck federbetätigt in eine Ruhestellung zu verfahren. In Fig. 1 ist die Ruhestellung des Kolbens 4 gezeigt. Der Motor des Kraftfahrzeugs ist aus. Der Hydraulikdruck fehlt. Die in Fig. 1 gezeigte Situation der Sicherheitsverriegelung 1 ist als Parkstufe zu bezeichnen.

Die Kolbenstangen 5a und 5b ragen jeweils an einem der Zylinderenden aus dem Hydraulikzylinder 2 heraus. Eine Kolbenstange 5a dient als Betätigungselement für eine Sperrvorrichtung. Die Sperrvorrichtung ist in der Zeichnung nicht dargestellt. Sie ist in der gezeigten Situation der Sicherheitsverriegelung 1 arretiert. Die andere Kolbenstange 5b ist mit einer Stellkontur 8 versehen, die mit einem Rasthebel 9 zusammenwirkt. Der Rasthebel 9 dient zur vorübergehenden Arretierung der Kolbenstange 5b und somit des Kolbens 4 und der Kolbenstange 5a bei sinkendem Hydraulikdruck. Er weist zwei Arme auf, die nach Art einer Wippe um eine Achse 10 schwenkbar gelagert sind. Ein Arm des Rasthebels 9 ist als Rastarm 9a mit einem Rasthaken 9b ausgebildet. Der andere Arm ist als Haltearm 9c ausgebildet und mit einer Magnetisierungsfläche 9d versehen. Ein Elektromagnet 11 ist auf der Seite des Haltearms 9c angeordnet und wirkt mit dessen Magnetisierungsfläche 9d zusammen. Der Rastarm 9a ist mit einer Feder 12 verbunden. Die Feder 12 schwenkt den Rasthebel 9 so, dass sich die Magnetisierungsfläche 9a des Haltearms 9c von dem Elektromagneten 11 entfernt, solange der Rasthebel 9 nicht mit der Stellkontur 8 der Kolbenstange 5b in Kontakt steht. In Fig. 1 befindet sich die Stellkontur 8 in einem Abstand zu dem Rasthebel 9. Die Feder 12 hat den Rasthebel 9 in eine Position geschwenkt, in der ein großer Abstand zwischen dem Elektromagnet 11 und der Magnetisierungsfläche 9d des Haltearms 9c besteht.

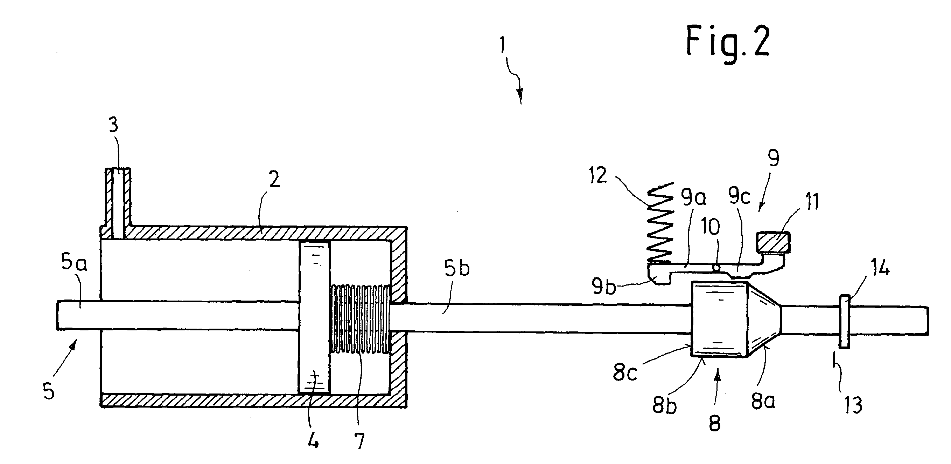

Die in Fig. 2 gezeigte Situation ist als Betriebsstufe der Sicherheitsverriegelung 1 aufzufassen. In dieser Situation läuft der Motor des Kraftfahrzeugs. Hydraulikdruck ist vorhanden. Der Kolben 4 ist gegen die Wirkung der Rückstellfeder 7 verfahren. Die Kolbenstange 5a hat in dieser Lage die Arretierung der Sperrvorrichtung gelöst. Der Haltearm 9c der Stellkontur 8 steht mit dem Rasthebel 9 in schleifendem Kontakt. Der Haltearm 9c ist bereits an einem Schrägbereich 8a der Stellkontur 8 entlang geschliffen. Durch die an dem Rastarm 9a angreifende Feder 12 ergibt sich eine Zwangsführung für den Rasthebel 9. In der Position gemäß Fig. 2 liegt der Haltearm 9c des Rasthebels 9 an einem Haltebereich 8b der Stellkontur 8 an. Der Haltbereich 8b der Stellkontur 8 ist parallel ausgerichtet zu der Bewegungsachse der Kolbenstange 5b. Daher verändert sich die Schwenkposition des Rasthebels 9 nicht, solange dessen Haltearm 9c mit dem Haltebereich 8b des Rasthebels 9 in Kontakt steht. Die in Fig. 2 dargestellte Schwenklage des Rasthebels 9 ist eine Bereitschaftsstellung, die bei einem plötzlichen Abfall des Hydraulikdrucks gehalten werden muss. Zu diesem Zweck wird der Elektromagnet 11 entweder permanent bestromt, während sich die Sicherheitsverriegelung 1 in der gezeigten Betriebsstufe befindet oder der Elektromagnet 11 wird erst dann eingeschaltet, wenn der Hydraulikdruck auf einen bestimmten Grenzdruck abgefallen ist.

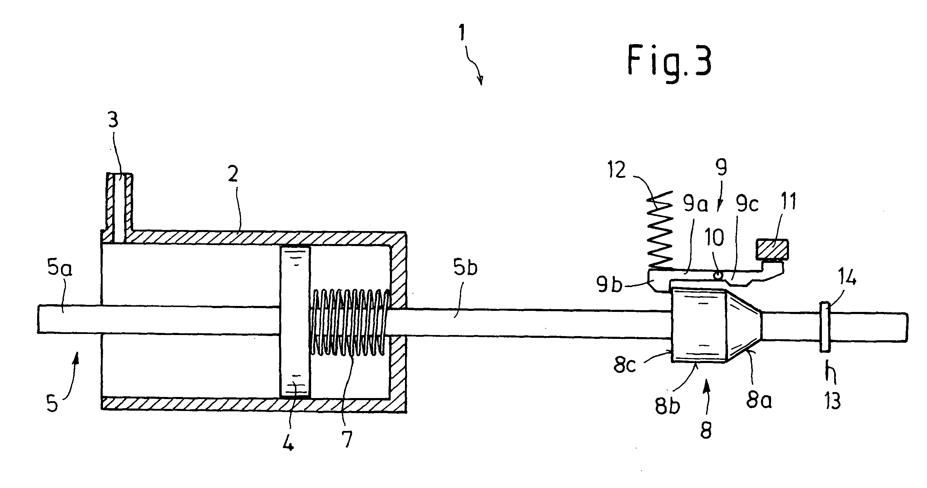

Fehlt der Hydraulikdruck, so stellt sich die in Fig. 3 gezeigte Situation ein, die als Neutralstufe bezeichnet werden soll. Der Motor des Kraftfahrzeugs ist aus. Die Rückstellfeder 7 des Hydraulikzylinders 2 ist bestrebt, den Kolben 4 in seine Ruhestellung zu bewegen, was bedeuten würde, dass die Sicherheitsverriegelung 1 die Parkstufe einnähme, in der die Sperrvorrichtung arretiert währe. Eine Arretierung muss in der Neutralstufe jedoch unterbleiben. Die Sperrvorrichtung muss trotz fehlendem Hydraulikdruck außer Eingriff gehalten werden. Der Rasthebel 9 befand sich bereits während der Betriebstufe in einer Bereitschaftsstellung. Diese wird durch den Elektromagneten 11 gehalten. Der Hydraulikdruck sinkt. Die Kolbenstange 5b kann durch die Rückstellfeder 7 des Hydraulikzylinders 2 lediglich soweit zurückgestellt werden, bis der Rasthaken 9b des Rasthebels 9 mit einem an der Kolbenstange 5b vorgesehenen Anschlag 8c in Kontakt kommt. Als Anschlag 8c ist eine plane Fläche an der Stellkontur 8 der Kolbenstange vorgesehen. Die Neutralstufe der Sicherheitsverriegelung 1 wird gehalten, solange dem Elektromagnet 11 Strom zugeführt wird. Die Kolbenstange 5 ist zwar um einen kleinen Weg zurückgestellt worden, wobei jedoch eine Arretierung der Sperrvorrichtung noch nicht erfolgt.

Die permanente Bestromung des Elektromagneten 11 ist die einfachste Alternative, um den Rasthebel 9 bei sinkendem Hydraulikdruck in seiner Bereitschaftsstellung zu halten. Eine andere Alternative besteht darin, dem Elektromagneten Strom erst dann zuzuschalten, wenn der Hydraulikdruck auf einen bestimmten Grenzdruck abgesunken ist. Hierfür ist ein Schalter 13 vorgesehen sowie ein Betätigungsteil für den Schalter 13. Sowohl Schalter 13 als auch Betätigungsteil 14 sind in allen Figuren 1 bis 3 eingezeichnet. Dabei kann das Betätigungsteil 14 mechanisch mit dem Schalter 13 zusammenwirken. Im Falle eines berührungslosen Schalters kann das Betätigungsteil 14 ein Magnetring sein und der Schalter 13 ein Hall-Sensor.

Nach Fig. 2 ist als Betätigungsteil 14 ein Betätigungsring vorgesehen, der sich in einem Abstand zu dem Schalter 13 befindet. Der Elektromagnet 11 ist in dieser Situation stromlos. Der Rasthebel 9 ist mit Hilfe der Stellkontur 8 der Kolbenstange 5b in seine Bereitschaftsstellung geschwenkt. Bei sinkendem Hydraulikdruck schleift der Haltearm 9c des Rasthebels 9 solange auf dem Haltebereich 8b der Stellkontur 8 und verharrt in seiner Bereitschaftsstellung, bis das Betätigungsteil 14 den Schalter 13 erreicht hat. Bei weiter nachlassendem Hydraulikdruck, wie in Fig. 3 gezeigt, wird der Elektromagnet 11 bestromt und der Rasthebel 9 magnetisch festgehalten. Die mit dem Anschlag 8c versehene Kolbenstange 5b kann bei sinkendem Hydraulikdruck nur soweit zurückgestellt werden, wie in Fig. 3 dargestellt, weil der Anschlag 8c gegen den Rasthaken 9b des Rasthebels 9 stößt.

Die Stellkontur 8 ist gemäß der Figuren 1 bis 3 ein drehsymmetrisches Teil an der Kolbenstange 5b. Der Schrägbereich 8a der Stellkontur 8 weist eine kegelige Mantelfläche auf. Die Mantelfläche des Haltebereichs 8b der Stellkontur ist zylindrisch.

### BEZUGSZEICHENLISTE

- 1: Sicherheitsverriegelung
- 2: Hydraulikzylinder
- 3: Anschlussöffnung
- 4: Kolben
- 5: Kolbenstange
- 5a: Stangenbereich
- 5b: Stangenbereich
- 7: Rückstellfeder
- 8: Stellkontur
- 8a: Schrägbereich
- 8b: Haltebereich
- 8c: Anschlag
- 9: Rasthebel
- 9a: Rastarm
- 9b: Rasthaken
- 9c: Haltearm
- 9d: Magnetisierungsfläche
- 10: Achse
- 11: Elektromagnet
- 12: Feder
- 13: Schalter
- 14: Betätigungsteil

## Patentansprüche

1. Sicherheitsverriegelung (1) zur Schaltung dreier Verriegelungsstufen einer als eine Parksperre eines automatischen Getriebes eines Kraftfahrzeugs wirkenden Sperrvorrichtung, nämlich einer Parkstufe, einer Betriebsstufe sowie einer Neutralstufe, umfassend einen einseitig wirkenden Hydraulikzylinder (2) mit Kolben (4) und Kolbenstange (5), wobei der Kolben (4) in einer Bewegungsrichtung per Hydraulikdruck und in entgegengesetzter Bewegungsrichtung über eine Rückstellfeder (7) bewegbar ist, sowie umfassend ein Betätigungselement (5a, 5b) für die Sperrvorrichtung, das über den Hydraulikzylinder (2) angetrieben ist, ferner umfassend einen federbelasteten Rasthebel (9) und einen an dem Betätigungselement (5a, 5b) vorgesehenen Anschlag (8c), wobei der Rasthebel (9) eine Magnetisierungsfläche (9d) aufweist und ein mit der Magnetisierungsfläche (9d) zusammenwirkender Elektromagnet (11) zur Schaltung der Neutralstufe der Sperrvorrichtung vorgesehen ist, **dadurch gekennzeichnet, dass** die Kolbenstange (5) in Stangenbereiche (5a) und (5b) aufgeteilt ist, wobei ein erster Stangenbereich (5a) das Betätigungselement für die Sperrvorrichtung bildet, und ein zweiter Stangenbereich (5b) eine Stellkontur (8) aufweist, mit der der Rasthebel (9) in eine Bereitschaftsstellung bewegbar ist.

2. Sicherheitsverriegelung nach Anspruch 1, **dadurch gekennzeichnet, dass** ein Stangenbereich (5a) der Kolbenstange auf einer Seite des Kolbens (4) und der andere Stangenbereich (5b) auf der anderen Seite des Kolbens (4) vorgesehen ist.

3. Sicherheitsverriegelung nach Anspruch 1 oder 2, **dadurch gekennzeichnet, dass** die Stellkontur (8) einen Schrägbereich (8a) aufweist sowie einen Haltebereich (8b), der parallel zur Kolbenstange (5) ausgerichtet ist.

4. Sicherheitsverriegelung nach Anspruch 3, **dadurch gekennzeichnet, dass** in der Betriebsstufe der Haltebereich (8b) der Stellkontur (8) mit dem Rasthebel (9) in Kontakt ist und die Magnetisierungsfläche (9d) des Rasthebels (9) an dem Elektromagnet (11) anliegt.

5. Sicherheitsverriegelung nach einem der Ansprüche 1 bis 4, **dadurch gekennzeichnet, dass** ein Schalter (13) vorgesehen ist, über den ein Strom für den Elektromagneten (11) dann schaltbar ist, wenn der Hydraulikdruck in dem Hydraulikzylinder (2) auf einen bestimmten Grenzdruck abgesunken ist.

6. Sicherheitsverriegelung nach Anspruch 5, **dadurch gekennzeichnet, dass** an der Kolbenstange (5) ein Betätigungsteil (14) für den Schalter (13) vorgesehen ist.

7. Sicherheitsverriegelung nach einem der Ansprüche 1 bis 6, **dadurch gekennzeichnet, dass** mehrere Rasthebel vorgesehen sind.

8. Sicherheitsverriegelung nach einem der Ansprüche 1 bis 7, **dadurch gekennzeichnet, dass** ein Zwischenraum zwischen Elektromagnet (11) und der Magnetisierungsfläche (9d) des Rasthebels (9) mit einer Kapselung versehen ist.

9. Sicherheitsverriegelung nach einem der Ansprüche 1 bis 8, **dadurch gekennzeichnet, dass** zwischen der Stellkontur (8) und dem Rasthebel (9) ein Ausgleichselement zwischengeschaltet ist.

## Claims

1. Safety lock (1) for selecting three locking stages of a blocking apparatus which acts as a parking lock mechanism of an automatic transmission of a motor vehicle, namely a park stage, an operation stage and a neutral stage, comprising a hydraulic cylinder (2) which acts on one side and has a piston (4) and a piston rod (5), wherein the piston (4) can be moved in one movement direction by hydraulic pressure and in the opposite movement direction by means of a restoring spring (7), and also comprising an actuating element (5a, 5b) for the blocking apparatus, which actuating element is driven by means of the hydraulic cylinder (2), and also comprising a spring-loaded latching lever (9) and a stop (8c) which is provided on the actuating element (5a, 5b), wherein the latching lever (9) has a magnetization area (9d) and an electromagnet (11) which interacts with the magnetization area (9d) is provided for selecting the neutral stage of the blocking apparatus, **characterized in that** the piston rod (5) is split into rod regions (5a) and (5b), with a first rod region (5a) forming the actuating element for the blocking apparatus, and a second rod region (5b) having an actuating contour (8) with which the latching lever (9) can be moved into a readiness position.

2. Safety lock according to Claim 1, **characterized in that** one rod region (5a) of the piston rod is provided on one side of the piston (4) and the other rod region (5b) is provided on the other side of the piston (4).

3. Safety lock according to Claim 1 or 2, **characterized in that** the actuating contour (8) has an inclined region (8a) and a retaining region (8b) which is oriented parallel to the piston rod (5).

4. Safety lock according to Claim 3, **characterized in that** the retaining region (8b) of the actuating contour (8) is in contact with the latching lever (9) in the operation stage, and the magnetization area (9d) of the latching lever (9) rests against the electromagnet (11).

5. Safety lock according to one of Claims 1 to 4, **characterized in that** a switch (13) is provided, by means of which a current can be connected for the electromagnet (11) when the hydraulic pressure in the hydraulic cylinder (2) has fallen to a specific limit pressure.

6. Safety lock according to Claim 5, **characterized in that** an actuating part (14) for the switch (13) is provided on the piston rod (5).

7. Safety lock according to one of Claims 1 to 6, **characterized in that** a plurality of latching levers is provided.

8. Safety lock according to one of Claims 1 to 7, **characterized in that** an intermediate space between the electromagnet (11) and the magnetization area (9d) of the latching lever (9) is provided with an encapsulation.

9. Safety lock according to one of Claims 1 to 8, **characterized in that** a compensation element is interposed between the actuating contour (8) and the latching lever (9).

## Revendications

1. Verrouillage de sécurité (1) pour commuter trois niveaux de verrouillage d'un dispositif de blocage faisant office de frein de stationnement d'une boîte de vitesses automatique d'un véhicule automobile, à savoir un niveau de stationnement, un niveau de fonctionnement ainsi qu'un niveau neutre, comprenant un vérin hydraulique (2) à action unilatérale muni d'un piston (4) et d'une bielle (5), le piston (4) pouvant être déplacé dans un sens de déplacement par la pression hydraulique et dans le sens de déplacement inverse par le biais d'un ressort de rappel (7), et comprenant aussi un élément d'actionnement (5a, 5b) pour le dispositif de blocage, lequel est entraîné par le vérin hydraulique (2), comprenant en plus un levier d'enclenchement (9) à ressort et une butée (8c) prévue sur l'élément d'actionnement (5a, 5b), le levier d'enclenchement (9) présentant une surface de magnétisation (9d) et un électroaimant (11) agissant conjointement avec la surface de magnétisation (9d) étant prévu pour la commutation du niveau neutre du dispositif de blocage, **caractérisé en ce que** la bielle (5) est divisée en les zones de tige bielle (5a) et (5b), une première zone de bielle (5a) formant l'élément d'actionnement pour le dispositif de blocage et une deuxième zone de bielle (5b) présentant un profil de commande (8) avec lequel le levier d'enclenchement (9) peut être déplacé dans une position prête.

2. Verrouillage de sécurité selon la revendication 1, **caractérisé en ce que** qu'une zone de bielle (5a) de la bielle est prévue d'un côté du piston (4) et l'autre zone de bielle (5b) est prévue de l'autre côté du piston (4).

3. Verrouillage de sécurité selon la revendication 1 ou 2, **caractérisé en ce que** le profil de commande (8) présente une zone inclinée (8a) ainsi qu'une zone de maintien (8b) qui est orientée parallèlement à la bielle (5).

4. Verrouillage de sécurité selon la revendication 3, **caractérisé en ce que** dans le niveau de fonctionnement, la zone de maintien (8b) du profil de commande (8) est en contact avec le levier d'enclenchement (9) et la surface de magnétisation (9b) du levier d'enclenchement (9) repose contre l'électroaimant (11).

5. Verrouillage de sécurité selon l'une des revendications 1 à 4, **caractérisé en ce qu'**il est prévu un commutateur (13) par le biais duquel peut être commuté un courant pour l'électroaimant (11) lorsque la pression hydraulique dans le vérin hydraulique (2) a chuté à une pression limite donnée.

6. Verrouillage de sécurité selon la revendication 5, **caractérisé en ce qu'**une pièce d'actionnement (14) du commutateur (13) est prévue sur la bielle (5).

7. Verrouillage de sécurité selon l'une des revendications 1 à 6, **caractérisé en ce que** plusieurs leviers d'enclenchement sont prévus.

8. Verrouillage de sécurité selon l'une des revendications 1 à 7, **caractérisé en ce qu'**un espace intermédiaire entre l'électroaimant (11) et la surface de magnétisation (9d) du levier d'enclenchement (9) est muni d'un blindage.

9. Verrouillage de sécurité selon l'une des revendications 1 à 8, **caractérisé en ce qu'**un élément de compensation est intercalé entre le profil de commande (8) et le levier d'enclenchement (9).
